# EUROPÄISCHE PATENTSCHRIFT

(11) **EP 3 482 854 B1**
(45) Veröffentlichungstag und Bekanntmachung des Hinweises auf die Patenterteilung: **12.08.2020**
(21) Anmeldenummer: 18204322.4
(22) Anmeldetag: 05.11.2018
(51) Int. Cl.: B22F 3/105, B33Y 70/00, B33Y 10/00, B29C 64/153, B29C 64/40

(54) **VERFAHREN ZUR HERSTELLUNG EINES HALBZEUGS UND EINES WERKSTÜCKS**
METHOD FOR PRODUCING A SEMI-FINISHED PART AND A WORKPIECE
PROCÉDÉ DE FABRICATION D'UN DEMI-PRODUIT ET D'UNE PIÈCE À USINER

(30) Priorität: 13.11.2017 DE 102017126537
(43) Veröffentlichungstag der Anmeldung: 15.05.2019
(73) Patentinhaber: SLM Solutions Group AG, 23560 Lübeck (DE)
(72) Erfinder: Dr. Schwarze, Dieter, 23560 Lübeck (DE)
(74) Vertreter: Schicker, Silvia

(56) Entgegenhaltungen:
- EP-A1- 2 910 362
- EP-A1- 3 050 650
- WO-A1-2017/143005
- US-A- 5 141 680
- GAN M X ET AL: "Practical support structures for selective laser melting", JOURNAL OF MATERIALS PROCESSING TECHNOLOGY, ELSEVIER, NL, Bd. 238, 6. August 2016 (2016-08-06), Seiten 474-484, XP029701002, ISSN: 0924-0136, DOI: 10.1016/J.JMATPROTEC.2016.08.006

## Beschreibung

Die Erfindung betrifft ein Verfahren zur Herstellung eines dreidimensionalen Halbzeugs mithilfe eines generativen Schichtbauverfahrens. Ferner betrifft die Erfindung ein mithilfe eines generativen Schichtbauverfahrens hergestelltes dreidimensionales Halbzeug sowie ein Verfahren zur Herstellung eines dreidimensionalen Werkstücks aus diesem Halbzeug.

Bei generativen Verfahren zur Herstellung dreidimensionaler Werkstücke und insbesondere bei generativen Schichtbauverfahren ist es bekannt, eine zunächst formlose oder formneutrale Formmasse (zum Beispiel ein Rohstoffpulver) schichtweise auf einen Träger aufzutragen und durch ortsspezifisches Bestrahlen zu verfestigen (z. B. durch Verschmelzen oder Versintern), um letztendlich ein Werkstück einer gewünschten Form zu erhalten. Das Bestrahlen kann mittels elektromagnetischer Strahlung erfolgen, beispielsweise in Form von Laserstrahlung. In einem Ausgangszustand kann die Formmasse zunächst als Granulat, als Pulver oder als flüssige Formmasse vorliegen und infolge der Bestrahlung selektiv oder, anders ausgedrückt, ortsspezifisch verfestigt werden. Die Formmasse kann zum Beispiel Keramik-, Metall- oder Kunststoffmaterialien umfassen und auch Materialgemische hieraus. Eine Variante von generativen Schichtbauverfahren betrifft das sogenannte Pulverbettschmelzen, bei dem insbesondere metallische und/oder keramische Rohstoffpulvermaterialien zu dreidimensionalen Werkstücken verfestigt werden.

Zur Herstellung einzelner Werkstückschichten ist es ferner bekannt, Rohstoffpulvermaterial in Form einer Rohstoffpulverschicht auf einen Träger aufzubringen und selektiv sowie nach Maßgabe der Geometrie der aktuell herzustellenden Werkstückschicht zu bestrahlen. Die Laserstrahlung dringt in das Rohstoffpulvermaterial ein und verfestigt dieses, beispielsweise in Folge eines Erhitzens, was ein Schmelzen oder Sintern verursacht. Ist eine Werkstückschicht verfestigt, wird eine neue Schicht von unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen. Bekannte Vorrichtungen zur Herstellung von dreidimensionalen Werkstücken finden sich beispielsweise in der EP 2 961 549 A1 und in der EP 2 878 402 A1. Die in diesen Dokumenten beschriebenen Vorrichtungen umfassen jeweils einen Träger, welcher Schicht für Schicht in vertikale Richtung nach unten abgesenkt werden kann. Eine entsprechende vertikale Bewegung des Trägers findet in diesen bekannten Vorrichtungen immer dann statt, wenn eine Schicht des Rohstoffpulvers vollständig bestrahlt wurde und bevor die nächste Pulverschicht aufgetragen wird. Somit kann gewährleistet werden, dass sich eine Fokalebene der Bestrahlungseinheit immer in der zu verfestigen Schicht (d. h. in der obersten Schicht) des Rohstoffpulvers befindet.

Bei der Herstellung eines dreidimensionalen Werkstücks mithilfe eines generativen Schichtbauverfahrens werden üblicherweise neben dem Werkstück auch Stützelemente Schicht für Schicht aufgebaut. Diese Stützelemente dienen dazu, beim Aufbau der einzelnen Werkstückschichten in die Formmasse eingebrachte Wärme abzuführen und dadurch eine Überhitzung und/oder einen Verzug des Werkstücks zu verhindern. Darüber hinaus fixieren die Stützelemente das Werkstück und/oder einzelne Werkstückschichten relativ zu dem zum Aufbau des Werkstücks genutzten Träger, wodurch beispielsweise der Aufbau von Werkstücküberhängen oder dergleichen ermöglicht wird. Nach der Fertigstellung des aus dem Werkstück und den Stützelementen bestehenden Halbzeugs werden die Stützelemente üblicherweise durch mechanische spanende Bearbeitung, wie zum Beispiel Fräsen, abgetragen.

Viele durch ein generatives Schichtbauverfahren zu dreidimensionalen Werkstücken verarbeitete Materialien weisen eine geringe Wärmeleitfähigkeit auf. Beispielsweise beträgt die Wärmeleitfähigkeit von Edelstahl lediglich ca. 20 W/mK. Um beim Aufbau von aus derartigen Materialien bestehenden Werkstücken eine ausreichende Wärmeabfuhr über die Stützelemente zu gewährleisten, kommt den Stützelementen eine große Bedeutung zu. Beispielsweise werden Werkstücke mit großen Flächen und/oder dickwandigen Volumenkörpern üblicherweise mit stark verstärkten Stützelementen bis hin zu massiven Stützsockeln versehen.

Das Dokument WO 2017/143005 A1 beschreibt ein mittels 3D-Druck hergestelltes Werkstück, welches ein kreisförmiges Bauteil, eine Trägerstruktur und eine Reihe lösbarer Opfer-Grenzbereiche aufweist, die an Stellen ausgebildet sind, an denen das Bauteil mit der Trägerstruktur gekoppelt ist. Während des 3D-Druckvorgangs werden das Bauteil und die Trägerstruktur aus demselben Material, beispielsweise Edelstahl, Titan oder Siliziumkarbid, und die Opfer-Grenzbereiche aus einem anderen Material, beispielsweise Eisen oder Kupfer, hergestellt, welches eine niedrigere elektrochemische Stabilität aufweist als das Material des Bauteils. In einem anderen Beispiel sind das Bauteil aus Siliziumkarbid und die Opfer-Grenzbereiche aus Siliziumoxid hergestellt.

Aufgabe der Erfindung ist es, ein effizientes Verfahren zur Herstellung eines dreidimensionalen Halbzeugs mithilfe eines generativen Schichtbauverfahrens bereitzustellen. Ferner liegt der Erfindung die Aufgabe zugrunde, ein effizient mittels eines generativen Schichtbauverfahrens herzustellendes Halbzeug sowie ein Verfahren zur Herstellung eines dreidimensionalen Werkstücks aus einem derartigen Halbzeug anzugeben.

Diese Aufgabe wird durch ein Verfahren mit den Merkmalen des Patentanspruchs 1, ein Halbzeug mit den Merkmalen des Patentanspruchs 7 sowie ein Verfahren mit den Merkmalen des Patentanspruchs 11 gelöst.

Bei einem Verfahren zur Herstellung eines dreidimensionalen Halbzeugs wird ein erstes Rohstoffpulver auf einen Träger aufgetragen. Ferner wird ein zweites Rohstoffpulver auf den Träger aufgetragen. Der Träger kann eine horizontale Oberfläche aufweisen, auf welche das Rohstoffpulver schichtweise, d. h. in horizontalen Schichten, aufgetragen werden kann. Ferner kann der Träger Schicht für Schicht in vertikaler Richtung nach unten abgesenkt werden. Zum Auftragen des ersten und des zweiten Rohstoffpulvers auf den Träger kann eine Pulverauftragsvorrichtung verwendet werden, die über die Oberfläche eines Trägers bewegbar ist. Die Pulverauftragsvorrichtung kann eine Walze, einen Schieber oder ein anderes geeignetes Bauteil umfassen, das dazu eingerichtet ist, in horizontaler Richtung über eine Oberfläche des Trägers oder eine bereits auf die Oberfläche des Trägers aufgetragene Pulverschicht zu fahren und dabei eine neue Pulverschicht aufzutragen.

Die Pulverauftragsvorrichtung ist vorzugsweise dazu eingerichtet, Rohstoffpulverschichten auf den Träger aufzubringen, die sowohl das erste als auch das zweite Rohstoffpulver enthalten. Bei dem Verfahren zur Herstellung eines dreidimensionalen Halbzeugs erfolgt das Auftragen des ersten und des zweiten Rohstoffpulvers somit vorzugsweise ortsselektiv, d.h. auf Bereiche des Trägers, in denen aus dem ersten Rohstoffpulver ein Bauteil oder ein Bauteilabschnitt aufgebaut werden soll, wird das erste Rohstoffpulver aufgetragen. Im Gegensatz dazu wird auf Bereiche des Trägers, in denen aus dem zweiten Rohstoffpulver ein Bauteil oder ein Bauteilabschnitt aufgebaut werden soll, das zweite Rohstoffpulver aufgetragen.

Eine Pulverauftragsvorrichtung, die zum Auftragen von aus mehreren Materialien bestehenden Pulverschichten geeignet ist, kann beispielsweise separate Pulverreservoirs für das erste und das zweite Rohstoffpulver umfassen. Die Pulverreservoirs können integriert mit dem über die Oberfläche des Trägers bewegbaren Bauteil der Pulverauftragsvorrichtung ausgebildet sein und sich im Betrieb der Pulverauftragsvorrichtung ebenfalls über die Oberfläche des Trägers bewegen. Durch entsprechende Steuerung der Pulverabgabe aus den Pulverreservoirs können das erste und das zweite Rohstoffpulver dann ortselektiv auf den Träger aufgetragen werden. Alternativ dazu kann die Pulverauftragsvorrichtung jedoch auch ortsfeste Pulverreservoirs umfassen, die beispielsweise benachbart zu dem Träger angeordnet sind und von denen das bewegliche Bauteil der Pulverauftragsvorrichtung Pulver entnimmt und über die Oberfläche des Trägers verteilt. Das bewegliche Teil der Pulverauftragsvorrichtung kann beispielsweise eine Düse umfassen, die über den Träger bewegbar ist, um das erste und das zweite Rohstoffpulver ortselektiv auf den Träger aufzutragen.

Das zweite Rohstoffpulver hat eine höhere Wärmeleitfähigkeit als das erste Rohstoffpulver. Dementsprechend hat eine aus dem zweiten Rohstoffpulver gefertigte Struktur eine höhere Wärmeleitfähigkeit als eine aus dem ersten Rohstoffpulver gefertigte Struktur. Vorzugsweise hat eine aus dem zweiten Rohstoffpulver gefertigte Struktur eine Wärmeleitfähigkeit, die ca. mindestens um einen Faktor 10, besonders bevorzugt mindestens um einen Faktor 15 und insbesondere bevorzugt mindestens um einen Faktor 20 höher ist als die Wärmeleitfähigkeit einer aus dem ersten Rohstoffpulver gefertigten Struktur.

Das auf den Träger aufgetragene erste Rohstoffpulver wird selektiv, insbesondere ortselektiv, mit elektromagnetischer Strahlung oder Teilchenstrahlung bestrahlt, um auf dem Träger ein aus dem ersten Rohstoffpulver gefertigtes Werkstück durch ein generatives Schichtbauverfahren herzustellen. Auch das auf den Träger aufgetragene zweite Rohstoffpulver wird selektiv, insbesondere ortselektiv, mit elektromagnetischer Strahlung oder Teilchenstrahlung bestrahlt, um auf dem Träger ein aus dem zweiten Rohstoffpulver gefertigtes Stützelement durch ein generatives Schichtbauverfahren herzustellen. Falls gewünscht oder erforderlich können bei dem Verfahren zur Herstellung eines dreidimensionalen Halbzeugs auch mehrere Stützelemente aus dem zweiten Rohstoffpulver aufgebaut werden. Wesentlich ist lediglich, dass mindestens ein Stützelement, vorzugsweise alle Stützelemente des Halbzeugs aus dem zweiten Rohstoffpulver gefertigt werden, während das Werkstück aus dem ersten Rohstoffpulver aufgebaut wird. Das aus dem zweiten Rohstoffpulver gefertigte Stützelement hat eine höhere Wärmeleitfähigkeit als das aus dem ersten Rohstoffpulver gefertigte Werkstück.

Eine Bestrahlungseinheit, die dazu dient, die auf den Träger aufgetragenen und das erste sowie das zweite Rohstoffpulver enthaltenen Rohstoffpulverschichten zu bestrahlen kann mindestens ein optisches Element umfassen. Bei dem optischen Element kann es sich beispielsweise um eine Scan-Einheit, eine Fokussier-Einheit und/oder um eine F-Theta-Linse handeln. Ferner kann die Bestrahlungseinheit eine Strahlquelle umfassen, wie beispielsweise eine Elektronenstrahlquelle oder einen Laser. Die von der Bestrahlungseinheit ausgesendete Strahlung kann der Bestrahlungseinheit jedoch auch von einer Strahlquelle zugeführt werden, welche sich außerhalb der Bestrahlungseinheit befindet. Hierfür können beispielsweise Spiegel, optische Fasern und/oder andere Lichtleiter verwendet werden.

Das Werkstück und das Stützelement können mittels eines einzigen optischen Elements, beispielsweise einer einzigen Scan-Einheit gefertigt werden. Alternativ dazu ist es jedoch auch möglich, mehrere optische Elemente, zum Beispiel mehrere Scan-Einheiten zur Herstellung des Werkstücks und des Stützelements einzusetzen. Beispielsweise kann eine erste Scan-Einheit dazu verwendet werden, das Werkstück aufzubauen, und eine zweite Scan-Einheit kann dazu verwendet werden, das Stützelement aufzubauen. Der Scanprozess, beispielsweise die Scangeschwindigkeit, der Strahldurchmesser, die Eindringtiefe der Strahlung in das Pulver und die Leistung der Strahlquelle, kann dann optimal an die Verarbeitungseigenschaften des Rohstoffpulvers angepasst werden.

Die Verarbeitung des ersten und des zweiten Rohstoffpulvers kann bei einer im Wesentlichen gleichen Leistung der Strahlquelle, d.h. beispielsweise bei im Wesentlichen gleicher Laserleistung erfolgen. Alternativ dazu ist es jedoch auch denkbar, zur Verarbeitung des ersten und des zweiten Rohstoffpulvers unterschiedliche Leistungen der Strahlquelle, d.h. beispielsweise unterschiedliche Laserleistungen zu verwenden. Beispielsweise können zur Verarbeitung des ersten und des zweiten Rohstoffpulvers unterschiedliche Strahlquellen, d.h. beispielsweise unterschiedliche Laser mit unterschiedlichen Laserleistungen eingesetzt werden. Insbesondere kann, falls erforderlich, ein Laser mit einer höheren Laserleistung zur Verarbeitung des zweiten Rohstoffpulvers mit höherer Wärmeleitfähigkeit eingesetzt werden.

Während der Herstellung des dreidimensionalen Halbzeugs führt das Stützelement beim Bestrahlen des ersten und des zweiten Rohstoffpulvers eingebrachte Wärme ab. Ferner kann das Stützelement dazu dienen, das Werkstück relativ zu dem Träger zu fixieren und beispielsweise Werkstücküberhänge abzustützen. Die im Vergleich zur Wärmeleitfähigkeit des ersten Rohstoffpulvers und des Werkstücks höhere Wärmeleitfähigkeit des zweiten Rohstoffpulvers und des Stützelements ermöglicht eine besonders rasche und effektive Wärmeabfuhr, wodurch das Risiko eines Verzugs und/oder einer Überhitzung des Werkstücks verringert werden kann. Ferner kann das Stützelement weniger voluminös gestaltet werden, wodurch die Bauzeit für das aus dem Werkstück und dem Stützelement bestehende Halbzeug verkürzt werden kann. Schließlich kann ein weniger voluminöses Stützelement leichter von dem Werkstück getrennt werden, wodurch auch der Aufwand für die Nachbearbeitung des Halbzeugs verringert werden kann.

Des Weiteren ermöglicht die höhere Wärmeleitfähigkeit des zweiten Rohstoffpulvers und des daraus gefertigten Stützelements, dass das zweite Rohstoffpulver mit einer höheren Scangeschwindigkeit, insbesondere einer bis um den Faktor 5 höheren Scangeschwindigkeit verarbeitet werden kann als das erste Rohstoffpulver, ohne dass es zu einer Schädigung des aus dem zweiten Rohstoffpulver gefertigten Stützelements durch unzureichende Wärmeabfuhr kommt. Dadurch wird es ermöglicht, dass das Stützelement mit einer höheren Scangeschwindigkeit aufgebaut werden kann als das Werkstück, was insbesondere dann die Bauzeit für das Halbzeug verringert, wenn ein großflächiges und/oder voluminöses Stützelements erforderlich ist. Zusätzlich oder alternativ dazu kann die höhere Wärmeleitfähigkeit des zweiten Rohstoffpulvers und des daraus gefertigten Stützelements dazu genutzt werden, die Scangeschwindigkeit bei der Verarbeitung des ersten Rohstoffpulvers zu erhöhen, d.h. das aus dem ersten und dem zweiten Rohstoffpulver gefertigte Halbzeug kann mit einer höheren Scangeschwindigkeit aufgebaut werden als ein Halbzeug, bei dem sowohl das Werkstück als auch das Stützelement aus dem ersten Rohstoffpulver mit geringerer Wärmeleitfähigkeit hergestellt wird.

Das aus dem ersten Rohstoffpulver gefertigte Werkstück hat eine Wärmeleitfähigkeit von 5 bis 25 W/mK, und insbesondere bevorzugt von ca. 6 bis 20 W/mK. Ein besonders bevorzugtes Werkstück hat eine Wärmeleitfähigkeit von ca. 6,5 bis 7,5 W/mK, besonders bevorzugt von ca. 7 W/mK. Das aus dem zweiten Rohstoffpulver gefertigte Stützelement hat eine Wärmeleitfähigkeit von 100 bis 400 W/mK, besonders bevorzugt von ca. 120 bis 400 W/mK und insbesondere bevorzugt von ca. 130 bis 380 W/mK.

In einer bevorzugten Ausführungsform des Verfahrens zur Herstellung eines dreidimensionalen Halbzeugs besteht das Werkstück aus einem metallischen Material mit einer Wärmeleitfähigkeit von maximal ca. 25 W/mK, besonders bevorzugt von maximal ca. 20 W/mK und insbesondere bevorzugt von maximal ca. 10 W/mK. Ein besonders bevorzugtes Werkstück besteht aus einem metallischen Material mit einer Wärmeleitfähigkeit von ca. 7 W/mK. Das Stützelement besteht aus einem keramischen Material mit einer Wärmeleitfähigkeit von mindestens 100 W/mK, besonders bevorzugt von mindestens ca. 120 W/mK und insbesondere bevorzugt von mindestens ca. 140 W/mK.

Das erste Rohstoffpulver ist vorzugsweise ein Titanlegierungspulver, insbesondere TiAl6V4-Pulver. Die Wärmeleitfähigkeit eines TiAl6V4-Werkstücks beträgt ca. 7 W/mK. Alternativ dazu ist es jedoch auch denkbar, ein Stahlpulver, beispielsweise Edelstahlpulver als das erste Rohstoffpulver zu verwenden. Das Werstück hat dann eine Wärmeleitfähigkeit von ca. 20 W/mK. Das erste Rohstoffpulver kann in Abhängigkeit der gewünschten Eigenschaften des aus dem ersten Rohstoffpulver zu fertigenden Werkstücks unterschiedliche Partikelgrößen und Partikelgrößenverteilungen haben. Vorzugsweise liegt die Partikelgröße des ersten Rohstoffpulvers jedoch unter 100 µm.

Das zweite Rohstoffpulver ist vorzugsweise ein SiC-Pulver, insbesondere ein SiC-Precursorpulver. Die Wärmeleitfähigkeit eines Bauteils aus reinem SiC beträgt ca. 360 W/mK, die Wärmeleitfähigkeit eines Bauteils aus technischem SiC ca. 100 bis 140 W/mK. Die Wärmeleitfähigkeit des Stützelements kann demnach ca. 100 bis 140 w/mK, ggf. jedoch auch bis zu 360 W/mk betragen. Ähnlich wie das erste Rohstoffpulver, kann auch das zweite Rohstoffpulver in Abhängigkeit der gewünschten Eigenschaften des aus dem zweiten Rohstoffpulver zu fertigenden Stützelements unterschiedliche Partikelgrößen und Partikelgrößenverteilungen haben. Jedoch liegt auch die Partikelgröße des zweiten Rohstoffpulvers vorzugsweise unter 100 µm. Wenn dieses SiC-Precursorpulver hohen Temperaturen, insbesondere Temperaturen, die im Bereich der Schmelztemperatur des Materials des ersten Rohstoffpulvers liegen, ausgesetzt wird, sublimiert und rekristallisiert das SiC-Precursorpulver, so dass sich feste Strukturen aus SiC und folglich ein aus SiC bestehendes Stützelement aufbauen lassen.

Bei dem Verfahren zur Herstellung eines dreidimensionalen Halbzeugs kann der Träger Schicht für Schicht in vertikaler Richtung nach unten in eine Baukammer abgesenkt werden. Eine sich im Wesentlichen vertikal erstreckende Baukammerwand bildet dann eine seitliche Begrenzung für das auf den Träger aufgetragene Rohstoffpulver, sodass das fertige Halbzeug schließlich - eingebettet in nicht bei der Fertigung des Halbzeugs verbrauchtem, d. h. bestrahltem Rohstoffpulver - in der Baukammer aufgenommen ist. Dieses nicht verbrauchte Rohstoffpulver wird vorzugsweise aufbereitet und wiederverwendet. Die Aufbereitung des Rohstoffpulvers kann, je nach Bedarf, verschiedene Reinigungs- und/oder Klassierungsschritte zur Entfernung von Verunreinigungen und/oder Grobartikeln aus dem Rohstoffpulver umfassen.

Ein nach dem Verfahren zur Herstellung eines dreidimensionalen Halbzeugs gefertigtes Halbzeug ist nach seiner Fertigstellung in ein sowohl Partikel des ersten Rohstoffpulvers als auch Partikel des zweiten Rohstoffpulvers umfassendes Rohstoffpulvergemisch eingebettet. Das Verfahren zur Herstellung eines dreidimensionalen Halbzeugs umfasst daher vorzugsweise einen Schritt zum Trennen des nicht bei der Fertigung des Werkstücks verbrauchten ersten Rohstoffpulvers von dem nicht bei der Fertigung des Stützelements verbrauchten zweiten Rohstoffpulver. Insbesondere wird ein Dichtetrennverfahren genutzt, um das nicht bei der Fertigung des Werkstücks verbrauchte erste Rohstoffpulver von dem nicht bei der Fertigung des Stützelements verbrauchten zweiten Rohstoffpulver zu trennen.

Ein Dichtetrennverfahren ist dann effizient einsetzbar, wenn zwischen der Dichte des ersten Rohstoffpulvers und der Dichte des zweiten Rohstoffpulvers eine ausreichende Differenz besteht. Wenn SiC, das eine spezifische Dichte von 2,54 g/cm³ und damit eine geringere spezifische Dichte als Aluminium hat, als das zweite Rohstoffpulver eingesetzt wird, kann dieses Material von vielen metallischen Rohstoffpulvern, wie beispielsweise Pulver aus Titan, Titanlegierungen, Eisen, Eisenlegierungen oder Stahl, insbesondere Edelstahl, zuverlässig und effizient durch ein Dichtetrennverfahren getrennt werden.

Beispielsweise kann das nicht bei der Fertigung des Werkstücks verbrauchte erste Rohstoffpulver durch Sichten in einem Fluid von dem nicht bei der Fertigung des Stützelements verbrauchten zweiten Rohstoffpulver getrennt werden. Dadurch kann eine rasche, zuverlässige und automatisierte Trennung der Rohstoffpulver realisiert werden.

Ein dreidimensionales Halbzeug umfasst ein durch selektives Bestrahlen eines auf einen Träger aufgetragenen ersten Rohstoffpulvers mit elektromagnetischer Strahlung oder Teilchenstrahlung aus einem ersten Rohstoffpulver gefertigtes Werkstück. Ferner umfasst das Halbzeug ein durch selektives Bestrahlen eines auf den Träger aufgetragenen zweiten Rohstoffpulvers mit elektromagnetischer Strahlung oder Teilchenstrahlung aus dem zweiten Rohstoffpulver gefertigtes Stützelement. Das Stützelement ist dazu eingerichtet, beim Bestrahlen des ersten und des zweiten Rohstoffpulvers eingebrachte Wärme abzuführen und/oder das Werkstück relativ zu dem Träger zu fixieren. Das zweite Rohstoffpulver hat eine höhere Wärmeleitfähigkeit als das erste Rohstoffpulver. Demnach hat das aus dem ersten Rohstoffpulver gefertigte Werkstück eine niedrigere Wärmeleitfähigkeit als das aus dem zweiten Rohstoffpulver gefertigte Stützelement.

Erfindungsgemäß hat das aus dem ersten Rohstoffpulver gefertigte Werkstück eine Wärmeleitfähigkeit von 5 bis 25 W/mK. Zusätzlich dazu hat das aus dem zweiten Rohstoffpulver gefertigte Stützelement eine Wärmeleitfähigkeit von 100 bis 400 W/mK. Beispielsweise kann das aus dem ersten Rohstoffpulver gefertigte Werkstück aus einem metallischen Material mit einer Wärmeleitfähigkeit von maximal 20 W/mK bestehen. Zusätzlich zu besteht das aus dem zweiten Rohstoffpulver gefertigte Stützelement aus einem keramischen Material mit einer Wärmeleitfähigkeit von mindestens 100 W/mK.

Das erste Rohstoffpulver und folglich das Werkstück besteht vorzugsweise aus einer Titanlegierung, insbesondere TiAl6V4. Das zweite Rohstoffpulver ist vorzugsweise ein SiC-Pulver, insbesondere ein SiC-Precursorpulver, sodass das Halbzeug vorzugsweise ein aus SiC bestehendes Stützelement umfasst.

Bei einem Verfahren zur Herstellung eines dreidimensionalen Werkstücks wird zunächst nach dem oben beschriebenen Verfahren ein dreidimensionales Halbzeug hergestellt. Anschließend wird das aus dem zweiten Rohstoffpulver gefertigte Stützelement von dem aus dem ersten Rohstoffpulver gefertigten Werkstück getrennt. Die Trennung des Stützelements von dem Werkstück erfolgt vorzugsweise nach dem Entnehmen des das Werkstück und das Stützelement umfassenden Halbzeugs aus dem Pulverbett, das aus dem bei der Fertigung des Halbzeugs zwar auf den Träger aufgetragenen, aber nicht verbrauchten ersten und zweiten Rohstoffpulver besteht. Grundsätzlich ist es denkbar, das Stützelement durch einen chemischen Lösungsprozess von dem Werkstück zu trennen. Vorzugsweise erfolgt das Trennen des aus dem zweiten Rohstoffpulver gefertigten Stützelements von dem aus dem ersten Rohstoffpulver gefertigten Werkstück jedoch durch ein mechanisches Verfahren. Dadurch können kurze Verfahrenszeiten realisiert werden.

Insbesondere kann das aus dem zweiten Rohstoffpulver gefertigte Stützelement durch ein spanendes Verfahren, wie zum Beispiel Sägen oder Fräsen, von dem aus dem ersten Rohstoffpulver gefertigten Werkstück getrennt werden. Schließlich ist es denkbar, die Materialeigenschaften des Stützelements und insbesondere die Sprödigkeit eines keramischen Stützelements für die Trennung des Stützelements von dem Werkstück zu nutzen. Beispielsweise kann ein keramisches Stützelement, insbesondere ein aus SiC bestehendes Stützelement durch Absprengen infolge einer mechanischen Last oder einer Temperaturwechsellast von dem aus dem ersten Rohstoffpulver gefertigten Werkstück getrennt werden. Dadurch kann der Nachbearbeitungsaufwand des Halbzeugs zur Trennung des Stützelements von dem Werkstück minimiert werden.

Die Erfindung wird im Folgenden anhand der beigefügten schematischen Figuren näher erläutert. Es stellen dar:
- Figur 1: eine schematische Ansicht einer Vorrichtung, die ein Verfahren zur Herstellung eines dreidimensionalen Halbzeugs ausführt; und
- Figur 2: ein dreidimensionales Halbzeug, das Werkstück und ein Stützelement umfasst.

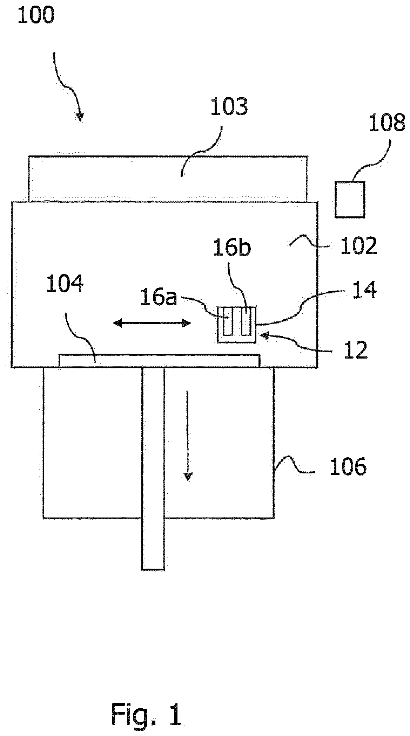

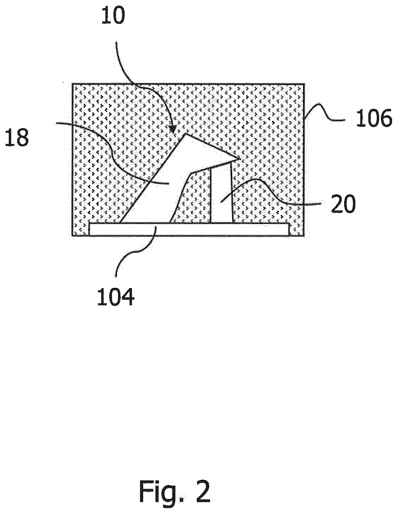

Figur 1 zeigt eine schematische Ansicht einer Vorrichtung 100, die dazu eingerichtet ist, ein Verfahren zur Herstellung eines in Figur 2 veranschaulichten dreidimensionalen Halbzeugs 10 auszuführen. Die Vorrichtung 100 umfasst einen Prozessraum 102 sowie eine oberhalb des Prozessraums 102 angeordnete Bestrahlungseinrichtung 103. Der Prozessraum 102 ist gegenüber der Umgebungsatmosphäre abgedichtet, so dass in dem Prozessraum 102 bei Bedarf eine Inert- oder Reaktionsgasatmosphäre oder ein gegenüber dem Atmosphärendruck verringerter Druck eingestellt werden kann. In dem Prozessraum ist ein Träger 104 angeordnet, der dazu dient, Rohstoffpulver sowie das durch ein generatives Schichtbauverfahren aus dem Rohstoffpulver hergestelltes Halbzeug 10 aufzunehmen. Der Träger 104 ist relativ zu dem Prozessraum 102 in vertikaler Richtung nach unten in eine Baukammer 106 verschiebbar.

Die Bestrahlungseinrichtung 103 der Vorrichtung 100 umfasst eine Strahlquelle, vorzugsweise eine Laserquelle, die beispielsweise Licht bei einer Wellenlänge von ungefähr 1064 nm emittiert. Alternativ dazu kann sich die Strahlquelle (beispielsweise ein Laser) auch außerhalb der Bestrahlungseinrichtung 103 befinden und ein über das Rohstoffpulver zu führender Strahl kann der Bestrahlungseinrichtung 103 beispielsweise mithilfe einer optischen Faser zugeführt werden. Die Bestrahlungseinrichtung 103 weist ferner optische Elemente, wie beispielsweise eine Scan-Einheit, eine Fokussier-Einheit und eine F-Theta-Linse auf. Die Scan-Einheit ist dazu eingerichtet, den Strahl über die oberste Rohstoffpulverschicht innerhalb einer horizontalen Ebene (in x-Richtung und y-Richtung) zu scannen. Die Fokussier-Einheit ist dazu eingerichtet, eine Fokus-Position des Strahls (in z-Richtung) zu verändern bzw. anzupassen, sodass sich eine Fokalebene der Bestrahlungseinrichtung 103 im Bereich der obersten Rohstoffpulverschicht befindet, welche von der Bestrahlungseinrichtung 103 bestrahlt wird. Falls gewünscht, kann die Bestrahlungseinrichtung 103 auch mehrere Scan-Einheiten und ggf. auch mehrere Strahlungsquellen umfassen.

Ferner umfasst die Vorrichtung 100 eine Pulverauftragsvorrichtung 12, die über eine Oberfläche des Trägers 104 bewegbar ist, um das zur Herstellung eines Werkstücks vorgesehene Rohstoffpulver schichtweise auf die Oberfläche des Trägers 104 aufzubringen. Die Pulverauftragsvorrichtung 12 umfasst einen Schieber 14, der sich im Betrieb der Pulverauftragsvorrichtung 12 in horizontaler Richtung über die Oberfläche des Trägers 104 oder eine bereits auf die Oberfläche des Trägers 104 aufgetragene Pulverschicht bewegt und dabei eine neue Pulverschicht aufträgt.

Die Pulverauftragsvorrichtung 12 ist dazu eingerichtet, Rohstoffpulverschichten auf den Träger 104 aufzubringen, die sowohl ein erstes Rohstoffpulver als auch ein von dem ersten Rohstoffpulver verschiedenes zweites Rohstoffpulver enthalten. Insbesondere ist die Pulverauftragsvorrichtung 12 dazu eingerichtet, das erste und das zweite Rohstoffpulver ortsselektiv auf den Träger 104 aufzutragen, d.h. definierte erste Bereiche des Trägers 104 mit dem ersten Rohstoffpulver und von den ersten Bereichen verschiedene definierte zweite Bereiche des Trägers 104 mit dem zweiten Rohstoffpulver zu beschichten.

Hierzu umfasst die in Figur 1 gezeigte Pulverauftragsvorrichtung 12 ein erstes und ein zweites Pulverreservoir 16a, 16b, die integriert mit dem Schieber 14 ausgebildet sind und sich folglich gemeinsam mit dem Schieber 14 über die Oberfläche des Trägers 104 bewegen. In dem ersten Pulverreservoir 16a ist ein erstes Rohrstoffpulver aufgenommen, während in dem zweiten Pulverreservoir 16b ein von dem ersten Rohstoffpulver verschiedenes zweites Rohstoffpulver aufgenommen ist. Durch entsprechende Steuerung der Pulverabgabe aus den Pulverreservoirs 16a, 16b können das erste und das zweite Rohstoffpulver ortselektiv auf den Träger aufgetragen werden. Alternativ dazu kann die Pulverauftragsvorrichtung 12 jedoch auch ortsfeste Pulverreservoirs umfassen, die beispielsweise benachbart zu dem Träger 104 in dem Prozessraum 102 angeordnet sind. Die Pulverauftragsvorrichtung 12 kann beispielsweise eine Düse umfassen, die über den Träger 104 bewegbar ist, um das erste und das zweite Rohstoffpulver ortselektiv auf den Träger 104 aufzutragen.

Das in dem zweiten Pulverreservoir 16b aufgenommene zweite Rohstoffpulver hat eine höhere Wärmeleitfähigkeit als das in dem ersten Pulverreservoir 16a aufgenommene erste Rohstoffpulver. Insbesondere handelt es sich in dem hier beschriebenen Ausführungsbeispiel bei dem in dem zweiten Pulverreservoir 16b aufgenommenen zweiten Rohstoffpulver um ein SiC-Precursorpulver. Ein Bauteil aus reinem SiC hat eine Wärmeleitfähigkeit von 360 W/mK, ein Bauteil aus technischem SiC eine Wärmeleitfähigkeit von 100 bis 140 W/mK. Alternativ dazu kann aber auch ein anderes, insbesondere keramisches Precursorpulvermaterial verwendet werden, solange ein aus diesem Material gefertigtes Bauteil eine Wärmeleitfähigkeit von mindestens 100 W/mK hat.

Bei dem in dem ersten Pulverreservoir 16a aufgenommenen ersten Rohstoffpulver handelt es sich in dem hier gezeigten und geschilderten Beispiel um ein Titanlegierungspulver, insbesondere TiAl6V4-Pulver. Ein TiAl6V4- Bauteil hat eine Wärmeleitfähigkeit von lediglich 7 W/mK. Wenn man bei einem aus dem SiC-Precursorpulver gefertigten Bauteil von einer Wärmeleitfähigkeit von technischem SiC ausgeht, hat ein aus dem zweiten Rohstoffpulver gefertigtes Bauteil demnach eine Wärmeleitfähigkeit, die um bis zu einem Faktor 20 höher ist als die Wärmeleitfähigkeit des aus TiAl6V4-Pulver gefertigten Bauteils. Alternativ zu einem Titanlegierungspulver kann aber auch ein anderes, insbesondere metallisches Pulvermaterial, beispielsweise ein Edelstahlpulver verwendet werden, so dass ein aus dem Pulver gefertigtes Bauteil eine Wärmeleitfähigkeit von maximal 25 W/mK hat.

Das auf den Träger 104 aufgetragene erste Rohstoffpulver wird ortselektiv mit der von der Bestrahlungseinrichtung 103 emittierten Strahlung beaufschlagt. Der dadurch verursachte Wärmeeintrag in das erste Rohstoffpulver bewirkt ein Verschmelzen bzw. Versintern der Partikel des ersten Rohstoffpulvers, wodurch auf dem Träger 104 aus dem ersten Rohstoffpulver Schicht für Schicht ein Werkstück 18 aufgebaut wird. Insbesondere wird ein Bereich des Trägers 104, auf den mittels der Pulverauftragsvorrichtung 12 das erste Rohstoffpulver aufgetragen worden ist, Schicht für Schicht ortsselektiv bestrahlt, um das Werkstück 18 zu fertigen. Es versteht sich, dass der Bereich oder die Bereiche des Trägers 104, in denen aus dem ersten Rohstoffpulver das Werkstück 18 aufgebaut werden soll, von Schicht zu Schicht variieren kann/können.

Auch das auf den Träger 104 aufgetragene zweite Rohstoffpulver wird ortselektiv mit der von der Bestrahlungseinrichtung 103 emittierten Strahlung beaufschlagt. Der dadurch verursachte Wärmeeintrag in das zweite Rohstoffpulver bewirkt zumindest bei der Verwendung von SiC-Precursorpulver als das zweite Rohstoffpulver eine Sublimation und anschließende Rekristallisation der Partikel des zweiten Rohstoffpulvers, wodurch auf dem Träger 104 aus dem zweiten Rohstoffpulver Schicht für Schicht ein Stützelement 20 aufgebaut wird. Insbesondere wird ein Bereich des Trägers 104, auf den mittels der Pulverauftragsvorrichtung 12 das zweite Rohstoffpulver aufgetragen worden ist, Schicht für Schicht ortsselektiv bestrahlt, um das Stützelement 20 zu fertigen. Es versteht sich, dass der Bereich oder die Bereiche des Trägers 104, in denen aus dem zweiten Rohstoffpulver das Stützelement 20 aufgebaut werden soll, von Schicht zu Schicht variieren kann/können. Falls gewünscht oder erforderlich können auch mehrere Stützelemente 20 aus dem zweiten Rohstoffpulver aufgebaut werden. Wesentlich ist lediglich, dass mindestens ein Stützelement 20, vorzugsweise alle Stützelemente 20 des Halbzeugs 10 aus dem zweiten Rohstoffpulver gefertigt werden, während das Werkstück 18 aus dem ersten Rohstoffpulver aufgebaut wird.

Während der Herstellung des dreidimensionalen Halbzeugs 10 führt das Stützelement 20 beim Bestrahlen des ersten und des zweiten Rohstoffpulvers eingebrachte Wärme ab. Ferner dient das Stützelement 20 dazu, das Werkstück 18 relativ zu dem Träger 104 zu fixieren und, wie aus Figur 2 deutlich wird, einen Werkstücküberhang abzustützen. Die im Vergleich zur Wärmeleitfähigkeit des ersten Rohstoffpulvers und des Werkstücks 18 höhere Wärmeleitfähigkeit des zweiten Rohstoffpulvers und des Stützelements 20 ermöglicht eine besonders rasche und effektive Wärmeabfuhr, wodurch das Risiko eines Verzugs und/oder einer Überhitzung sowohl des Stützelements 20 als auch des Werkstücks 18 verringert werden kann.

Der Betrieb der Vorrichtung 100 wird mittels einer Steuereinheit 108 gesteuert. Insbesondere steuert die Steuereinheit 108 den Betrieb der Pulverauftragsvorrichtung 12 und der Bestrahlungseinrichtung 103. Beispielsweise steuert die Steuereinheit 108 den Betrieb der Bestrahlungseinrichtung 103 derart, dass der Scanprozess, insbesondere die Scangeschwindigkeit, der Strahldurchmesser, die Eindringtiefe der Strahlung in das Pulver und die Leistung der Strahlquelle, in Abhängigkeit des Rohstoffpulvers variiert und an die Verarbeitungseigenschaften des ersten und des zweiten Rohstoffpulvers angepasst werden.

Grundsätzlich kann die Verarbeitung des ersten und des zweiten Rohstoffpulvers unter der Steuerung der Steuereinheit 108 bei einer im Wesentlichen gleichen Leistung der Strahlquelle, d.h. beispielsweise bei im Wesentlichen gleicher Laserleistung erfolgen. Alternativ dazu ist es jedoch auch denkbar, zur Verarbeitung des ersten und des zweiten Rohstoffpulvers unterschiedliche Leistungen der Strahlquelle, d.h. beispielsweise unterschiedliche Laserleistungen zu verwenden. Beispielsweise können zur Verarbeitung des ersten und des zweiten Rohstoffpulvers unterschiedliche Strahlquellen, d.h. beispielsweise unterschiedliche Laser mit unterschiedlichen Laserleistungen eingesetzt werden. Insbesondere kann, falls erforderlich, ein Laser mit einer höheren Laserleistung zur Verarbeitung des zweiten Rohstoffpulvers mit höherer Wärmeleitfähigkeit eingesetzt werden.

Ferner ermöglicht die höhere Wärmeleitfähigkeit des zweiten Rohstoffpulvers, dass das zweite Rohstoffpulver mit einer höheren Scangeschwindigkeit, insbesondere einer bis um den Faktor 5 höheren Scangeschwindigkeit verarbeitet werden kann als das erste Rohstoffpulver, ohne dass es zu einer Schädigung des aus dem zweiten Rohstoffpulver gefertigten Stützelements 20 durch unzureichende Wärmeabfuhr kommt. Dadurch kann das Stützelement unter der Steuerung der Steuereinheit 108 mit einer höheren Scangeschwindigkeit aufgebaut werden als das Werkstück 18. Zusätzlich oder alternativ dazu kann die höhere Wärmeleitfähigkeit des zweiten Rohstoffpulvers dazu genutzt werden, die Scangeschwindigkeit bei der Verarbeitung des ersten Rohstoffpulvers zu erhöhen, d.h. das aus dem ersten und dem zweiten Rohstoffpulver gefertigte Halbzeug 10 kann unter der Steuerung der Steuereinheit 108 mit einer höheren Scangeschwindigkeit aufgebaut werden als ein Halbzeug bei dem sowohl das Werkstück als auch das Stützelement aus dem ersten Rohstoffpulver mit geringerer Wärmeleitfähigkeit hergestellt wird.

Wie aus Figur 2 ersichtlich wird, ist das fertige Halbzeug 10 schließlich - eingebettet in einem nicht bei der Fertigung des Halbzeugs 10 verbrauchtem, d. h. bestrahltem Rohstoffpulvergemisch, das sowohl Partikel des ersten Rohstoffpulvers als auch Partikel des zweiten Rohstoffpulvers enthält - in der Baukammer 106 aufgenommen.

Um das nicht verbrauchte erste und zweite Rohstoffpulver sinnvoll aufbereiten und wiederverwenden zu können, wird das Halbzeug 10 aus der Baukammer 106 entnommen und das in der Baukammer 106 enthaltene Rohstoffpulvergemisch einem Schritt zum Trennen des nicht bei der Fertigung des Werkstücks 18 verbrauchten ersten Rohstoffpulvers von dem nicht bei der Fertigung des Stützelements 20 verbrauchten zweiten Rohstoffpulver unterzogen.

Wenn SiC, das eine spezifische Dichte von 2,54 g/cm³ und damit eine geringere spezifische Dichte als Aluminium hat, als das zweite Rohstoffpulver eingesetzt wird, kann dieses Material von vielen metallischen ersten Rohstoffpulvern, wie beispielsweise Pulver hinaus Titan, Titanlegierungen, insbesondere TiAl6V4, Eisen, Eisenlegierungen oder Stahl, insbesondere Edelstahl, zuverlässig und effizient durch ein Dichtetrennverfahren getrennt werden. In dem hier gezeigten und geschilderten Beispiel wird das nicht bei der Fertigung des Werkstücks 18 verbrauchte erste Rohstoffpulver durch Sichten in einem Fluid von dem nicht bei der Fertigung des Stützelements 20 verbrauchten zweiten Rohstoffpulver getrennt.

Das aus der Baukammer 106 entnommene dreidimensionale Halbzeug 10 umfasst das durch selektives Bestrahlen des auf den Träger 104 aufgetragenen ersten Rohstoffpulvers mit elektromagnetischer Strahlung oder Teilchenstrahlung aus einem ersten Rohstoffpulver gefertigte Werkstück 18 sowie das durch selektives Bestrahlen des auf den Träger 104 aufgetragenen zweiten Rohstoffpulvers mit elektromagnetischer Strahlung oder Teilchenstrahlung aus dem zweiten Rohstoffpulver gefertigte Stützelement 20. Das aus dem ersten Rohstoffpulver gefertigte Werkstück 18 hat eine niedrigere Wärmeleitfähigkeit als das aus dem zweiten Rohstoffpulver gefertigte Stützelement 20. Insbesondere hat in dem hier beschriebenen Ausführungsbeispiel das aus TiAl6V4-Pulver gefertigte und folglich aus TiAl6V4 bestehende Werkstück 18 eine Wärmeleitfähigkeit von lediglich 7 W/m, während das aus SiC-Precursorpulver gefertigte und folglich aus SiC bestehende Stützelement 20 eine Wärmeleitfähigkeit von mindestens 100 bis 140 W/mK und ggf. bis zu 360 W/mK hat.

Zur Herstellung eines dreidimensionalen Werkstücks 18 wird nach der Fertigstellung des in Fig. 2 gezeigten Halbzeugs 10 und nach der Entnahme des Halbzeugs 10 aus der Baukammer 106 das aus dem zweiten Rohstoffpulver gefertigte Stützelement 20 von dem aus dem ersten Rohstoffpulver gefertigten Werkstück 18 getrennt. Die Trennung des Stützelements 20 von dem Werkstück 18 kann durch ein spanendes Verfahren, wie zum Beispiel Sägen oder Fräsen, erfolgen. Es ist jedoch auch möglich, die Sprödigkeit des keramischen Stützelements 20 für die Trennung des Stützelements 20 von dem aus einem duktilen metallischen Material bestehenden Werkstück 18 zu nutzen. Insbesondere kann das Stützelement 20 durch Absprengen infolge einer mechanischen Last oder einer Temperaturwechsellast von dem aus dem ersten Rohstoffpulver gefertigten Werkstück 18 getrennt werden.

### Bezugszeichenliste

Halbzeug 10
Pulverauftragsvorrichtung 12
Schieber 14
erstes Pulverreservoir 16a
zweites Pulverreservoir 16b
Werkstück 18
Stützelement 20
Vorrichtung zur Herstellung eines dreidimensionalen Halbzeugs 100
Prozessraum 102
Bestrahlungseinrichtung 103
Träger 104
Baukammer 106
Steuereinheit 108

## Patentansprüche

1. Verfahren zur Herstellung eines dreidimensionalen Halbzeugs (10) mit den Schritten:
- Auftragen eines ersten Rohstoffpulvers auf einen Träger (104),
- Auftragen eines zweiten Rohstoffpulvers auf den Träger (104),
- selektives Bestrahlen des auf den Träger (104) aufgetragenen ersten Rohstoffpulvers mit elektromagnetischer Strahlung oder Teilchenstrahlung, um auf dem Träger (104) ein aus dem ersten Rohstoffpulver gefertigtes Werkstück (18) durch ein generatives Schichtbauverfahren herzustellen, und
- selektives Bestrahlen des auf den Träger (104) aufgetragenen zweiten Rohstoffpulvers mit elektromagnetischer Strahlung oder Teilchenstrahlung, um auf dem Träger (104) ein aus dem zweiten Rohstoffpulver gefertigtes Stützelement (20) durch ein generatives Schichtbauverfahren herzustellen,
**dadurch gekennzeichnet, dass** das aus dem ersten Rohstoffpulver gefertigte Werkstück (18) eine Wärmeleitfähigkeit von 5 bis 25 W/mK hat,
wobei das aus dem zweiten Rohstoffpulver gefertigte Stützelement (20) aus einem keramischen Material mit einer Wärmeleitfähigkeit von mindestens 100 W/mK besteht, und
wobei das Stützelement (20) beim Bestrahlen des ersten und des zweiten Rohstoffpulvers eingebrachte Wärme abführt.

2. Verfahren nach Anspruch 1,
wobei das aus dem zweiten Rohstoffpulver gefertigte Stützelement (20) eine Wärmeleitfähigkeit von 100 bis 400 W/mK hat.

3. Verfahren nach Anspruch 1 oder 2,
wobei das Werkstück (18) aus einem metallischen Material mit einer Wärmeleitfähigkeit von maximal 20 W/mK besteht.

4. Verfahren nach einem der Ansprüche 1 bis 3,
wobei das erste Rohstoffpulver ein Titanlegierungspulver, insbesondere TiAl6V4-Pulver ist und/oder wobei zweite Rohstoffpulver ein SiC-Pulver, insbesondere ein SiC-Precursorpulver ist.

5. Verfahren nach einem der Ansprüche 1 bis 4,
wobei nicht bei der Fertigung des Werkstücks (18) verbrauchtes erstes Rohstoffpulver durch ein Dichtetrennverfahren von nicht bei der Fertigung des Stützelements (20) verbrauchtem zweitem Rohstoffpulver getrennt wird.

6. Verfahren nach Anspruch 5,
wobei das nicht bei der Fertigung des Werkstücks (18) verbrauchte erste Rohstoffpulver durch Sichten in einem Fluid von dem nicht bei der Fertigung des Stützelements (20) verbrauchten zweiten Rohstoffpulver getrennt wird.

7. Dreidimensionales Halbzeug (10), das umfasst:
- ein durch selektives Bestrahlen eines auf einen Träger (104) aufgetragenen ersten Rohstoffpulvers mit elektromagnetischer Strahlung oder Teilchenstrahlung aus einem ersten Rohstoffpulver gefertigtes Werkstück (18) und
- ein durch selektives Bestrahlen eines auf den Träger (104) aufgetragenen zweiten Rohstoffpulvers mit elektromagnetischer Strahlung oder Teilchenstrahlung aus dem zweiten Rohstoffpulver gefertigtes Stützelement (20), das dazu eingerichtet ist, beim Bestrahlen des ersten und des zweiten Rohstoffpulvers eingebrachte Wärme abzuführen und/oder das Werkstück (18) relativ zu dem Träger (104) zu fixieren,
**dadurch gekennzeichnet, dass** das Werkstück (18) eine Wärmeleitfähigkeit von 5 bis 25 W/mK hat und
wobei das Stützelement (20) aus einem keramischen Material mit einer Wärmeleitfähigkeit von mindestens 100 W/mK besteht.

8. Dreidimensionales Halbzeug nach Anspruch 7,
wobei das Stützelement (20) eine Wärmeleitfähigkeit von 100 bis 400 W/mK hat.

9. Dreidimensionales Halbzeug nach Anspruch 7 oder 8,
wobei das Werkstück (18) aus einem metallischen Material mit einer Wärmeleitfähigkeit von maximal 20 W/mK besteht.

10. Dreidimensionales Halbzeug nach einem der Ansprüche 7 bis 9,
wobei das Werkstück 18) aus einer Titanlegierung, insbesondere TiAl6V4 besteht und/oder wobei das Stützelement (20) aus SiC besteht.

11. Verfahren zur Herstellung eines dreidimensionalen Werkstücks (18) mit den Schritten:
- Herstellen eines dreidimensionalen Halbzeugs (10) nach dem Verfahren gemäß einem der Ansprüche 1 bis 6, und
- Trennen des aus dem zweiten Rohstoffpulver gefertigten Stützelements (20) von dem aus dem ersten Rohstoffpulver gefertigten Werkstück (18).

12. Verfahren nach Anspruch 11,
wobei das Trennen des aus dem zweiten Rohstoffpulver gefertigten Stützelements (20) von dem aus dem ersten Rohstoffpulver gefertigten Werkstück (18) durch ein mechanisches Verfahren erfolgt.

13. Verfahren nach Anspruch 11 oder 12,
wobei das aus dem zweiten Rohstoffpulver gefertigte Stützelement (20) durch ein spanendes Verfahren und/oder durch Absprengen infolge einer mechanischen Last oder einer Temperaturwechsellast von dem aus dem ersten Rohstoffpulver gefertigten Werkstück (18) getrennt wird.

## Claims

1. Method for manufacturing a three-dimensional semi-finished product (10) with the steps:
- applying a first raw material powder to a carrier (104),
- applying a second raw material powder to the carrier (104),
- selectively irradiating the first raw material powder applied to the carrier (104) with electromagnetic radiation or particle radiation, in order to manufacture on the carrier (104) a workpiece (18) produced from the first raw material powder by a generative layer construction method, and
- selectively irradiating the second raw material powder applied to the carrier (104) with electromagnetic radiation or particle radiation, in order to manufacture on the carrier (104) a support element (20) produced from the second raw material powder by a generative layer construction method,
**characterized in that**
the workpiece (18) produced from the first raw material powder has a thermal conductivity of 5 to 25 W/mK,
wherein the support element (20) produced from the second raw material powder consists of a ceramic material with a thermal conductivity of at least 100 W/mK, and
wherein the support element (20) dissipates heat introduced during irradiation of the first and the second raw material powder.

2. Method according to claim 1,
wherein the support element (20) produced from the second raw material powder has a thermal conductivity of 100 to 400 W/mK.

3. Method according to claim 1 or 2,
wherein the workpiece (18) consists of a metal material with a thermal conductivity of maximally 20 W/mK.

4. Method according to any one of claims 1 to 3,
wherein the first raw material powder is a titanium alloy powder, in particular TiAl6V4 powder and/or wherein the second raw material powder is an SiC powder, in particular an SiC precursor powder.

5. Method according to any one of claims 1 to 4,
wherein first raw material powder not consumed during the production of the workpiece (18) is separated from second raw material powder not consumed during the production of the support element (20) by a density separation process.

6. Method according to claim 5,
wherein the first raw material powder not consumed during the production of the workpiece (18) is separated from the second raw material powder not consumed during the production of the support element (20) by screening in a fluid.

7. Three-dimensional semi-finished product (10), comprising:
- a workpiece (18) produced from a first raw material powder by selectively irradiating a first raw material powder applied to a carrier (104) with electromagnetic radiation or particle radiation and
- a support element (20) produced from a second raw material powder by selectively irradiating the second raw material powder applied to the carrier (104) with electromagnetic radiation or particle radiation, which support element is adapted to dissipate heat introduced during irradiation of the first and the second raw material powder and/or to fix the workpiece (18) relative to the carrier (104),
**characterized in that**
the workpiece (18) has a thermal conductivity of 5 to 25 W/mK, and
wherein the support element (20) consists of a ceramic material with a thermal conductivity of at least 100 W/mK, and

8. Three-dimensional semi-finished product according to claim 7,
wherein the support element (20) has a thermal conductivity of 100 to 400 W/mK.

9. Three-dimensional semi-finished product according to claim 7 or 8,
wherein the workpiece (18) consists of a metal material with a thermal conductivity of maximally 20 W/mK.

10. Three-dimensional semi-finished product according to any one of claims 7 to 9,
wherein the workpiece (18) consists of a titanium alloy, in particular TiAl6V4 and/or
wherein the support element (20) consists of SiC.

11. Method for manufacturing a three-dimensional workpiece (18) with the steps:
- manufacturing a three-dimensional semi-finished product (10) according to the method according to any one of claims 1 to 6, and
- separating the support element (20) produced from the second raw material powder from the workpiece (18) produced from the first raw material powder.

12. Method according to claim 11,
wherein the separating of the support element (20) produced from the second raw material powder from the workpiece (18) produced from the first raw material powder takes place by a mechanical method.

13. Method according to claim 11 or 12,
wherein the support element (20) produced from the second raw material powder is separated from the workpiece (18) produced from the first raw material powder by a cutting process and/or by breaking off as a result of a mechanical load or a temperature change load.

## Revendications

1. Procédé de fabrication d'un semi-produit tridimensionnel (10) comprenant les étapes consistant à :
- appliquer une première poudre de matière première sur un support (104),
- appliquer une deuxième poudre de matière première sur le support (104),
- irradier sélectivement la première poudre de matière première appliquée sur le support (104) avec un rayonnement électromagnétique ou un rayonnement de particules afin de fabriquer sur le support (104) une pièce (18) produite à partir de la première poudre de matière première par un procédé de construction par génération de couches, et
- irradier sélectivement la deuxième poudre de matière première appliquée sur le support (104) avec un rayonnement électromagnétique ou un rayonnement de particules afin de fabriquer sur le support (104) un élément d'appui (20) produit à partir de la deuxième poudre de matière première par un procédé de construction par génération de couches,
**caractérisé en ce que** la pièce (18) produite à partir de la première poudre de matière première a une conductivité thermique de 5 à 25 W/mK,
dans lequel l'élément d'appui (20) produit à partir de la deuxième poudre de matière première est constitué d'un matériau céramique ayant une conductivité thermique d'au moins 100 W/mK et
dans lequel l'élément d'appui (20) évacue la chaleur introduite lors de l'irradiation de la première et de la deuxième poudre de matière première.

2. Procédé selon la revendication 1,
dans lequel l'élément d'appui (20) produit à partir de la deuxième poudre de matière première a une conductivité thermique de 100 à 400 W/mK.

3. Procédé selon la revendication 1 ou 2,
dans lequel la pièce (18) est constituée d'un matériau métallique ayant une conductivité thermique de 20 W/mK au maximum.

4. Procédé selon l'une des revendications 1 à 3,
dans lequel la première poudre de matière première est une poudre d'alliage de titane, en particulier une poudre de TiAl6V4 et/ou dans lequel la deuxième poudre de matière première est une poudre de SiC, en particulier une poudre de précurseur de SiC.

5. Procédé selon l'une des revendications 1 à 4,
dans lequel la première poudre de matière première non consommée lors de la production de la pièce (18) est séparée par un procédé de séparation par densité de la deuxième poudre de matière première non consommée lors de la production de l'élément d'appui (20).

6. Procédé selon la revendication 5,
dans lequel la première poudre de matière première non consommée lors de la production de la pièce (18) est séparée par tamisage dans un fluide de la deuxième poudre de matière première non consommée lors de la production de l'élément d'appui (20).

7. Semi-produit tridimensionnel (10) comprenant :
- une pièce (18) produite à partir d'une première poudre de matière première par irradiation sélective d'une première poudre de matière première appliquée sur un support (104) avec un rayonnement électromagnétique ou un rayonnement de particules, et
- un élément d'appui (20) produit à partir de la deuxième poudre de matière première par irradiation sélective d'une deuxième poudre de matière première appliquée sur le support (104) avec un rayonnement électromagnétique ou un rayonnement de particules, lequel élément d'appui (20) est conçu pour évacuer la chaleur introduite lors de l'irradiation de la première et de la deuxième poudre de matière première et/ou pour fixer la pièce (18) par rapport au support (104),
**caractérisé en ce que** la pièce (18) a une conductivité thermique de 5 à 25 W/mK,
dans lequel l'élément d'appui (20) est constitué d'un matériau céramique ayant une conductivité thermique d'au moins 100 W/mK.

8. Semi-produit tridimensionnel selon la revendication 7,
dans lequel l'élément d'appui (20) a une conductivité thermique de 100 à 400 W/mK.

9. Semi-produit tridimensionnel selon la revendication 7 ou 8,
dans lequel la pièce (18) est constituée d'un matériau métallique ayant une conductivité thermique de 20 W/mK au maximum.

10. Semi-produit tridimensionnel selon l'une des revendications 7 à 9,
dans lequel la pièce (18) est constituée d'un alliage de titane, en particulier de TiAl6V4 et/ou dans lequel l'élément d'appui (20) est constitué de SiC.

11. Procédé de fabrication d'une pièce tridimensionnelle (18) comprenant les étapes consistant à :
- fabriquer un semi-produit tridimensionnel (10) selon le procédé selon l'une des revendications 1 à 6, et
- séparer l'élément d'appui (20) produit à partir de la deuxième poudre de matière première de la pièce (18) produite à partir de la première poudre de matière première.

12. Procédé selon la revendication 11,
dans lequel la séparation de l'élément d'appui (20) produit à partir de la deuxième poudre de matière première de la pièce (18) produite à partir de la première poudre de matière première est effectuée par un procédé mécanique.

13. Procédé selon la revendication 11 ou 12,
dans lequel l'élément d'appui (20) produit à partir de la deuxième poudre de matière première est séparé de la pièce (18) produite à partir de la première poudre de matière première par un procédé d'usinage et/ou par enlèvement à la suite d'une charge mécanique ou d'un choc thermique.
